(19) Europäisches Patentamt
European Patent Office
Office européen des brevets

(11) Publication number: 0 061 694 B1

(12) **EUROPEAN PATENT SPECIFICATION**

(45) Date of publication of the patent specification: 01.02.84

(51) Int. Cl.[3]: C 09 K 5/00

(21) Application number: 82102384.3

(22) Date of filing: 23.03.82

(54) **Antifreeze concentrate and coolant for cooling systems of internal combustion engines, containing copolymers of an organo silicone sulfonate and a silicate.**

(30) Priority 01.04.81 US 250087
01.04.81 US 249916
01.04.81 US 250050

(43) Date of publication of application: 06.10.82 Bulletin 82/40

(45) Publication of the grant of the patent: 01.02.84 Bulletin 84/5

(84) Designated Contracting States: DE FR GB IT SE

(56) References cited:
GB - A - 1 005 207
GB - A - 2 018 266
US - A - 3 215 643
US - A - 4 241 015

(73) Proprietor: BASF WYANDOTTE CORPORATION, 1609 Biddle Avenue, Wyandotte Michigan 48192 (US)

(72) Inventor: Davis, Pauls, 30027 White, Gibralter Michigan 48173 (US)
Inventor: Wilson, Joe Carrol, 22136 Hall Road, Woodhaven Michigan 48183 (US)

(74) Representative: von Günner, Kurt, Dr. et al, c/o BASF Aktiengesellschaft Carl-Bosch-Strasse 38, D-6700 Ludwigshafen (DE)

EP 0 061 694 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

BUNDESDRUCKEREI BERLIN

# Antifreeze concentrate and coolant for cooling systems of internal combustion engines, containing copolymers of an organo silicone sulfonate and a silicate

The invention relates to antifreeze concentrates and coolants for cooling systems of internal combustion engines, containing small amounts of a corrosion inhibitor which can be prepared by reacting an organosilicone sulfonate with a silicate.

Sulfo-aralkyl siloxanes have been disclosed in U.S. 2,968,643 and sulfohydroxyalkyl siloxanes in U.S. 3,807,897.

U.S. 3,341,469 discloses copolymers of organosiloxanes and silicates and their use as corrosion inhibitors.

Furthermore from U.S. 3,215,643 organosiliconsulfonates as solvent foamers are known. GB 1,005,207 and U.S. 4,241,015 disclose organosiliconcarboxylates as corrosion inhibitors and GB 2,018,266 discloses the combination of silylalkylphosphonates and silicates as corrosion inhibitors in antifreeze compositions.

We have found that, surprisingly, copolymers of organosilicone sulfonates and silicates have a particularly high corrosion-inhibiting action.

It is therefore an object of the invention to provide antifreeze concentrates and coolants for cooling systems of internal combustion engines which, in addition to the main constituents alcohol, especially ethylene glycol, and water, contain conventional additives and, as a corrosion-inhibiting additive, a small amount of a copolymer prepared from

(a) 5 to 45 parts by weight of an organosilicone sulfonate of the formula I

$$MO_3-R-SiO_{1.5} \qquad \text{I}$$

where M is a cation selected from the group consisting of hydrogen, alkali metal and ammonium, preferably sodium, and R is
aralkyl of 8 to 14 carbon atoms, the sulfonyl group being attached to the aryl and the silicon atom to the alkyl,
an alkylene radical of 2 to 30 carbon atoms or a cycloalkylene radical of 4 to 18 carbon atoms,
or a hydroxy-substituted alkylene or alkylene-oxyalkylene moiety of 3 to 18 carbon atoms, the hydroxy group being attached to the carbon atom adjacent to the carbon atom attached to the sulfonyl group, and

(b) 55 to 95 parts of a water-soluble silicate of the formula II

$$[X-O]_e\, SiO_{\frac{4-e}{2}}$$

where X is a cation selected from the group consisting of sodium, potassium, lithium, rubidium and tetraorganoammonium, and e has a value from 1 to 3.

The compounds of the formula I, where R is aralkyl, and their preparation are described in detail in U.S. 2,968,643.

Examples of particularly suitable compounds are β-(sodium sulfophenyl)-ethyl polysiloxane of the formula

$$NaO_3S-C_6H_4(CH_2)_2SiO_{1.5},$$

β-(sodium sulfonaphthyl)-ethyl polysiloxane of formula

$$NaO_3S-C_{10}H_6(CH_2)_2SiO_{1.5},$$

and γ-(sodium sulfophenyl)-propyl polysiloxane of the formula

$$NaO_3S-C_6H_4(CH_2)_3SiO_{1.5}.$$

Examples of compounds of the formula I where R is an alkylene or cycloalkylene moiety are those with the radicals 1,3-propylene, 1,3-butylene, 1,3-(2-ethyl)-propylene, 1,6-hexylene and 1,5-pentylene. Examples of cycloalkylene radicals are cyclopentylene, cyclohexylene and cycloheptylene. In these compounds the sulfur atom and the silicon atom are separated from each other by at least two carbon atoms.

The silicone sulfonates having an alkylene chain are obtained by oxidation of either a siloxane thiuronium salt or a thiocyanoalkyl or thiocyanocycloalkyl siloxane. The salts are prepared therefrom in an conventional manner by means of bases.

Compounds of the formula I where R is a hydroxy-substituted alkylene radical or

alkyleneoxyalkylene radical can be prepared for example by reacting an epoxy or glycidoxy silicone with a bisulfite salt in the presence of a relatively small amount of a sulfite salt. These compounds and their preparation are described in detail in U.S. 3,507,897.

The water-soluble silicates which are useful in the preparation of the arylalkyl silicone sulfonate-silicate copolymers of the invention can be represented by the average formula:

$$[X—O]_e\ SiO_{\frac{4-e}{2}} \qquad (II)$$

wherein X is a cation that forms a water-soluble silicate such as an alkali metal, ammonium, or tetraorganoammonium cation (silicic acid, where X is hydrogen, can also be used), and e has a value from 1 to 3, or preferably from 1.0 to 2.5. The silicone sulfonate-silicate copolymers of the invention contain 5 to 45 parts by weight of silicone sulfonate groups and 55 to 95 parts by weight of silicate groups and, most preferably, 15 to 25 parts by weight of silicone sulfonate groups and 75 parts to 85 parts by weight of silicate groups, all based upon 100 parts by weight of said copolymer. Illustrative of these silicates are the alkali metal orthosilicates, the alkali metal metasilicates, the alkali metal tetrasilicates, the alkali metal disilicates, and the tetraorgano ammonium silicates. Specific examples of these silicates are potassium metasilicate, sodium orthosilicate, sodium disilicate, lithium orthosilicate, lithium metasilicate, lithium disilicate, rubidium disilicate, rubidium tetrasilicate, mixed silicates, tetra(methyl)ammonium silicate, tetra(ethyl)ammonium silicate, phenyltrimethylammonium silicate, benzyltrimethylammonium silicate, guanidine silicate, and tetra(hydroxy-ethyl)ammonium silicate. The preferred silicates are sodium and potassium silicates, especially sodium metasilicate and potassium metasilicate.

In preparing the copolymers of the invention, the starting silicate can be added to the reaction mixture as such or it can be formed in situ by adding the appropriate hydroxide, for instance, sodium or potassium hydroxide, and silicia to the reaction mixture. The temperature at which the arylalkyl silicone sulfonate and silicate are maintained in the reaction mixture to produce the copolymers of this invention can vary widely. Temperatures from 20°C to 150°C at ambient pressures can be used. However, temperatures from 20°C to 115°C are preferred. The use of other temperatures or pressures is generally undesirable since no advantage is gained thereby.

The formation of the copolymers of this invention provide a means of stabilizing the gel-forming tendencies of water-soluble silicates in aqueous liquids, for instance, alcohol solutions such as solutions of ethylene glycol utilized in the preparation of antifreeze compositions. The silicone sulfonate-silicate copolymer does not gel after extended heating at 82°C in an aqueous solution such as an aqueous solution containing an alcohol, for instance, ethylene glycol (an antifreeze coolant or antifreeze concentrates) as is the case with a water-soluble silicate. As a consequence of the retention of the water-solubility properties of the copolymer of the invention, aqueous alcohol solutions containing the copolymers of the invention cause remarkably less corrosion than water-soluble silicate inhibited aqueous alcohol solutions which makes the former admirably suited as non-corrosive coolants for use in the cooling system of internal combustion engines.

Alternatively, the copolymers of this invention can be used as corrosion inhibitors by adding the previously formed copolymer to an aqueous liquid and uniformly dispersing the copolymer throughout the liquid. Any suitable means can be used to disperse the copolymer throughout the liquid. Thus, in the case of moving liquids that are in contact with the metal to be protected, the copolymer can be added to the liquid while the liquid is in use and dispersion of the copolymer throughout the liquid can be achieved by the movement of the liquid. However, the copolymer can be added to the liquid prior to the use of the liquid in contact with the metal to be protected and the copolymer can be dispersed throughout the liquid by stirring the liquid. This latter procedure is preferred where the liquid is to be stored or where the liquid undergoes little movement when in use such as in the case of the preparation of antifreeze concentrates. This method is in contrast to the preparation of the copolymers of this invention in situ as described above.

When the silane precursors of the arylalkyl silicone sulfonate are added to an aquious liquid together with a water-soluble silicate to produce the siloxane and the copolymer in situ, the precursor silane is converted to the siloxane by hydrolysis when mixed with water even at ambient temperature. The silane precursors to the arylalkyl siloxane sulfonates can contain alkoxy groups attached to the silicon atom, for instance, methoxy, ethoxy, propoxy, or butoxy groups. The reaction of the silane and water-soluble silicate is catalyzed by the presence of the water-soluble silicate. The arylalkyl siloxane sulfonates so formed then react with the water-soluble silicate. Should it be desired to isolate the copolymer, distillation of the aqueous medium or aqueous alcohol medium can be used to concentrate the copolymer.

The copolymers of this invention are generally useful in a corrosion inhibiting amount for the protection of metals that come into contact with an aqueous liquid. The amount of the copolymers of this invention used in inhibiting corrosion of metals in contact with aqueous liquids is dependent upon the temperature, type of metal or metals being protected, type of any organic liquid in the solution, pH of the aqueous liquid, velocity of the aqueous liquid, inorganic solutes (e.g. electrolyses such as

chlorides, sulfates and bicarbonates) in the aqueous liquid and prior corrosion treatment or corrosion state of the metal. Generally, 0.125 part to 4 parts by weight, preferably 0.25 part to 1.25 parts by weight, and most preferably 0.75 part to 1.0 part by weight of said copolymer is used, all based upon 100 parts by weight of inhibited aqueous liquid such as an antifreeze concentrate or coolant composition.

Illustrative of suitable solutions are those containing water and monohydric or polyhydric alcohols (e.g., methanol, ethanol, propanol, ethylene glycol, propylene glycol and glycerol), hydroxyl and alkoxy end-blocked polyalkylene oxides (such as hydroxyl end-blocked polyethylene oxide), sulfoxides (such as methylsulfoxide), formamides (such as dimethylformamide) or cyclic ethers free of olefinic unsaturation (such as tetrahydrofuran, dioxane and the like). Suitable solutions containing water and a water-soluble organic liquid should contain at least 0.1 part by weight, or preferably, at least 5.0 parts by weight of water per 100 parts by weight of the total of the water and the organic liquid.

Inhibited alcohol compositions, such as antifreeze concentrates, containing an alcohol and a copolymer of this invention as a corrosion inhibitor are remarkably useful as antifreezes and coolants for the cooling systems of internal combustion engines. These antifreeze concentrates are inhibited alcohol solutions containing relatively small amounts of water and these coolants are inhibited alcohol solutions containing relatively large amounts of water. The antifreeze concentrates are adapted to economical shipment and storage and the coolants are adapted to use, as such, as heat transfer media in the cooling systems of internal combustion engines. In practice, the concentrate can be shipped to the point where it is to be added to the cooling system and there it can be diluted to from a coolant. Water imparts desirable properties to both the concentrate and coolant compositions (e.g. small form amounts of water serve to increase the solubility of the inhibitor components of the concentrate compositions and large amounts of water impart good heat transfer properties to the coolant compositions). These compositions generally contain from 1 part be weight to 900 parts by weight of water per 100 parts by weight of the antifreeze concentrate. It is preferable that the coolant compositions contain from 30 to 900 parts by weight of water per 100 parts by weight of the antifreeze concentrate. Generally, the concentrates contain from 1.0 part to 10 parts by weight (or preferably from 2 parts to 7 parts by weight) of water per 100 parts by weight of the antifreeze concentrate. The relative amount of water and alcohol in these compositions can be varied to lower the freezing point of the compositions by the desired amount. Preferably 85 to 97 percent by weight of the antifreeze concentrate is ethylene glycol and up to 10 percent by weight of the total weight of said concentrate is diethylene glycol. Most preferably, 90 percent to 95 percent by weight is ethylene glycol and 2 percent to 7 percent by weight is diethylene glycol, all based upon the total weight of said concentrate.

The pH of the inhibited aqueous alcohol compositions of this invention should be greater than seven to minimize corrosion of metals with which the compositions come in contact. Generally, the pH of the antifreeze concentrate or coolant composition is 8 to 12, preferably 8 to 11 and most preferably 8.5 to 10. The pH is maintained within the above pH ranges by the addition of conventional pH buffers such as salts of strong bases and weak acids, as are disclosed in U.S. 3,121,692.

If desired, various additives can be added to the above-described inhibited alcohol compositions in particular instances for imparting special properties. By way of illustration, anti-foam agents, identifying dyes, pH indicators, conventional corrosion inhibitors, alkaline pH buffers, sealants which prevent leakage of the coolant from the cooling system, anti-creep agents which prevent seepage of the coolant into the crankcase, and the like can be added to these compositions.

Conventional corrosion inhibitors and/or alkaline pH buffers which can be used under aqueous alkaline conditions in combination with the copolymer corrosion inhibitors of the invention include water-soluble metal salts such as the alkali metal carbonates, borax, the alkali metal phosphates, the alkali metal tungstates, the alkali metal salts of benzoic or toluic acid, the alkali metal salts of phenol, benzotriazole or tolyltriazole, alkali metal nitrates, alkali metal nirtrites and, alkali metal molybdates. Generally, such conventional corrosion inhibitors are used under alkaline conditions in an amount effective to inhibit corrosion. Generally, conventional corrosion inhibitors are used in the amount of 0.03 part to 5 parts by weight, preferably 0.1 to 2 parts by weight per 100 parts total weight of the antifreeze concentrate.

Useful antifoam agents are the alkoxylated nonionic surfactants which exhibit low-foaming characteristics. Examples of alkoxylated nonionic synthetic detergents which can be advantageously employed as antifreeze agents in the antifreeze compositions of the invention include polyoxyalkylene adducts of hydrophobic bases, as illustrated by PLURONIC(R)L-61. Typical hydrophobic bases which can be condensed with alkylene oxides are the mono- and polyalkylphenols and the compounds prepared by condensing polyoxypropylene with a hydrophobic base initiator having from about 1 to 6 carbon atoms and at least one reactive hydrogen atom. Additional useful defoamers based upon nonionic surfactants are disclosed in U.S. 3,931,029. Useful waterpump lubricants are known in the prior art. The abovedescribed additives can be incorporated in any convenient manner, e.g., by adding to a mixture of an alcohol, the silicone-sulfonate-silicate inhibitor and water in a container and stirring the additives into the mixture.

The effectiveness as metal corrosion inhibitors of the copolymers of the invention is a function of the

retention of the solubility characteristics of the copolymer in an aqueous media, i.e., to remain effective, the copolymers must not precipitate or form gels during the effective life of the inhibited aqueous media.

Test Method

In order to demonstrate the effectiveness of the silicone sulfonates as gel stabilizers for aqueous solutions of water-soluble silicates, the copolymers of the invention were formed by mixing, at ambient temperatures and pressure, silicone sulfonates with water-soluble silicates in a mixture of an antifreeze concentrate consisting of distilled water and antifreeze grade ethylene glycol. Samples of these antifreeze concentrates were placed in sealed glass jars, aged at a temperature of 82° C and a pH of 8 over a period of about 2 weeks, and observed for the appearance of gelation. As a means of judging the effectiveness of the siloxanes of the invention as gel stabilizers for water-soluble silicate solutions, the structurally closest siloxanes were utilized as controls in separate concentrates. Each of the sample concentrates were run in triplicate and contained 3 percent by weight distilled water, 0.4 percent by weight of sodium metasilicate ($Na_2SiO_3 \cdot 5\,H_2O$), the calculated amount of siloxane in weight percent, as noted below, so as to provide an equimolar amount in comparison with the control sample, and the balance antifreeze grade ethylene glycol which contains about 5 percent diethylene glycol. The silicate is in the form $NaOSiO_{1.5}$ in aqueous solution.

Example 1

(Control, forming no part of this invention)

Phenylethyl siloxane was utilized in the amount of 0.15 weight percent (0.93 mole) in the antifreeze concentrate described above under »Test Method«. The sample immediately formed an insoluble product preventing evaluation of gel stability after aging at 82° C.

Example 2

(Control, forming no part of this invention)

Phenylethyl siloxane was utilized in the amount of 0.024 weight percent (1.86 mole) in the antifreeze concentrate described above under »Test Method«. The sample formed insoluble products upon preparation thus preventing evaluation of gel stability at 82° C.

Example 3

(Control, forming no part of this invention)

Phenylsiloxane was utilized in the amount of 0.024 weight percent (1.86 mole) in the antifreeze concentrate described above under »Test Method«. The sample remained gel free after two weeks at 82° C.

Example 4

(Control, forming no part of this invention)

$\beta$-Sodium carboxyethyl siloxane was utilized in the amount of 0.04 weight percent (2.72 moles) in the antifreeze concentrate described above under »Test Method«. The samples gelled after 1 week at 82° C.

Example 5

$\beta$-(Sodium sulfophenyl)ethyl siloxane was utilized in the amount of 0.024 weight percent (0.93 mole) in the antifreeze concentrate described above under »Test Method«. The samples showed no gelation after two weeks at 82° C.

## Example 6

Example 5 was repeated except that the siloxane was utilized in the amount of 0.048 weight percent (1.86 moles). After two weeks at 82° C, the samples showed no sign of gelation.

## Example 7

$\beta$-(Sodium sulfophenyl)propyl siloxane in the form

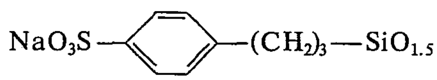

is used in the procedure of Example 6 to replace $\beta$-(sodium sulfophenyl)ethyl siloxane. No gel is formed.

## Example 8

$\gamma$-(Sodium sulfopropyl)siloxane was utilized in the form

$$NaO_3S-CH_2CH_2CH_2-SiO_{1.5}$$

in the amount of 0.10 weight percent (3.86 moles). After two weeks at 82° C, there was no gel evident in the solution containing the siloxane of this example.

## Example 9

(Control, forming no part of this invention)

3-Hydroxypropyl siloxane was utilized in the amount of 0.043 weight percent (3.86 moles). After 3 days at 82° C, the sample containing this siloxane gelled.

## Example 10

3-(Sodium sulfo-2-hydroxy-oxypropyl)propyl siloxane in the average form

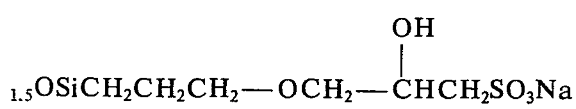

in aqueous solution was utilized in the amount of 0.01 weight percent (0.39 mole). After two weeks at 82° C, the sample utilizing this level of siloxane showed no indication of gelation.

## Example 11

Example 10 was repeated except that 0.02 weight percent (0.78 mole) of siloxane was used. After two weeks at 82° C, there was no indication of gelation.

## Example 12

Example 10 was repeated except that 0.04 weight percent (1.56 moles) of siloxane was used. After two weeks at 82° C, no gelation appeared.

Example 13

(Control, forming no part of this invention)

(2-3-Dihydroxyoxypropyl)-propyl siloxane was utilized in the amount of 0.007 weight percent (0.39 mole). No gelation occurred after two weeks at 82° C.

Example 14

(Control, forming no part of this invention)

Example 13 was repeated except that 0.014 weight percent (0.78 mole) was utilized. Gel formation occurred after two days at 82° C.

Example 15

(Control, forming no part of this invention)

Example 13 was repeated except that 0.029 weight percent (1.56 moles) was utilized. After 11 days at 82° C, gel formation occurred.

Example 16

The procedure of Example 12 is repeated substituting (3-sodiumsulfo-4-hydroxy cyclohexyl)ethyl siloxane for the siloxane of Example 12. In aqueous media, this has the average formula

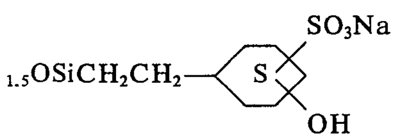

No gel is formed.

**Claims**

1. Antifreeze concentrates for cooling systems of internal combustion engines, consisting predominantly of alcohols and containing as corrosion inhibitors small amounts of a copolymer obtained by reaction of

(a) 5—45 parts by weight of an organosilicone sulfonate of the formula

$$MO_3S-R-SiO_{1.5} \qquad \text{I}$$

where M is a cation derived from hydrogen, alkali metal and ammonium
and R is an aralkyl moiety having 8 to 14 carbon atoms, the sulfo group being attached to the aryl part and the silicon to the alkyl part,
or an alkylene moiety with 2 to 30 carbon atoms or a cycloalkylene moiety with 4 to 18 carbon atoms,
or a hydroxy substituted alkylene or alkylene-oxyalkylene moiety having 3 to 18 carbon atoms, the hydroxy group being in $\beta$-position to the sulfonyl group and

(b) 55 to 95 parts by weight of a water-soluble silicate of the formula II

$$[X-O]_e\, SiO_{\frac{4-e}{2}}$$

where X is a cation derived from sodium, potassium, lithium, rubidium and tetraorganoammonium, and e has a value from 1 to 3.

2. Coolant for cooling systems of internal combustion engines consisting predominantly of a mixture

of alcohol and water and containing small amounts of a copolymer obtained by reaction of

(a) 5–45 parts by weight of an organosilicone sulfonate of the formula

$MO_3S-R-SiO_{1.5}$ I

where M is a cation derived from hydrogen, alkali metal and ammonium
and R is an aralkyl moiety having 8 to 14 carbon atoms, the sulfo group being attached to the aryl part and the silicon to the alkyl part,
or an alkylene moiety with 2 to 30 carbon atoms or a cycloalkylene moiety with 4 to 18 carbon atoms,
or a hydroxy substituted alkylene or alkylene-oxyalkylene moiety having 3 to 18 carbon atoms, the hydroxy group being in $\beta$-position to the sulfonyl group and

(b) 55 to 95 parts by weight of a water-soluble silicate of the formula II

$$[X-O]_{e}SiO_{\frac{4-e}{2}}$$

where X is a cation derived from sodium, potassium, lithium, rubidium and tetraorganoammonium, and e has a value from 1 to 3.

3. Antifreeze concentrate according to claim 1, wherein the alcohol is ethylene glycol.

4. Antifreeze concentrate according to claim 1, wherein the copolymer content is 0.1 to 2 percent by weight.

**Patentansprüche**

1. Frostschutzmittel-Konzentrate für Kühlsysteme von Verbrennungsmotoren, die überwiegend aus Alkoholen bestehen und als Korrosionsinhibitoren geringe Mengen eines Copolymerisats enthalten, das hergestellt wurde durch Umsetzung von

(a) 5–45 Gewichtsteilen eines Organosilikonsulfonats der Formel I

$MO_3S-R-SiO_{1.5}$

in der M ein von Wasserstoff, Alkalimetall und Ammonium hergeleitetes Kation
und R einen Aralkylrest mit 8 bis 14 Kohlenstoffatomen, wobei die Sulfogruppe am Arylteil und das Silizium am Alkylteil gebunden ist,
oder einen Alkylenrest mit 2 bis 30 Kohlenstoffatomen oder einen Cycloalkylenrest mit 4 bis 18 Kohlenstoffatomen,
oder einen hydroxyl-substituierten Alkylen- oder Alkylen-Oxyalkylen-Rest mit 3 bis 18 Kohlenstoffatomen, wobei die Hydroxylgruppe in $\beta$-Stellung zur Sulfonylgruppe steht,
bedeuten,
mit

(b) 55 bis 95 Gewichtsteilen eines wasserlöslichen Silikats der Formel II

$$[X-O]_{e}SiO_{\frac{4-e}{2}}$$

in der X ein von Natrium, Kalium, Lithium, Rubidium und Tetraorganoammonium hergeleitetes Kation bedeutet und e einen Wert von 1 bis 3 hat.

2. Kühlmittel für Kühlsysteme von Verbrennungsmotoren, das überwiegend aus einer Mischung aus Alkohol und Wasser besteht und geringe Mengen eines Copolymerisats enthält, das hergestellt wurde durch Umsetzung von

(a) 5–45 Gewichtsteilen eines Organosilikonsulfonats der Formel I

$MO_3S-R-SiO_{1,5}$

in der M ein von Wasserstoff, Alkalimetall und Ammonium hergeleitetes Kation
und R einen Aralkylrest mit 8 bis 14 Kohlenstoffatomen, wobei die Sulfogruppe am Arylteil und

das Silizium am Alkylteil gebunden ist,
oder einen Alkylenrest mit 2 bis 30 Kohlenstoffatomen oder einen Cycloalkylenrest mit 4 bis 18 Kohlenstoffatomen,
oder einen hydroxyl-substituierten Alkylen- oder Alkylen-Oxyalkylen-Rest mit 3 bis 18 Kohlenstoffatomen, wobei die Hydroxylgruppe in $\beta$-Stellung zur Sulfonylgruppe steht,
bedeuten,
mit

(b) 55 bis 95 Gewichtsteilen eines wasserlöslichen Silikats der Formel II

$$[X-O]_e SiO_{\frac{4-e}{2}}$$

in der X ein von Natrium, Kalium, Lithium, Rubidium und Tetraorganoammonium hergeleitetes Kation bedeutet und e einen Wert von 1 bis 3 hat.

3. Frostschutzmittel-Konzentrat nach Anspruch 1, dadurch gekennzeichnet, daß man als Alkohol Ethylenglykol verwendet.

4. Frostschutzmittel-Konzentrat nach Anspruch 1, dadurch gekennzeichnet, daß der Gehalt an Copolymerisat 0,1 bis 2 Gewichtsprozent beträgt.

## Revendications

1. Concentrés antigel pour systèmes de refroidissement de moteurs à combustion interne, composés principalement d'alcools et centenant, en tant qu'inhibiteurs de corrosions, de petites quantités d'un copolymère obtenu par réaction de

a) 5 à 45 parties en poids d'un sulfonate d'organo-silicone de formule

$$MO_3S-R-SiO_{1,5} \quad (I)$$

dans laquelle M est un cation provenant de l'hydrogène, d'un métal alcalin ou de l'ammonium,
et R est un fragment aralcoyle à 8–14 atomes de carbone, le groupe sulfo étant fixé à la partie aryle et le silicium à la partie alcoyle,
ou un fragment alcoylène à 2–30 atomes de carbone ou un fragment cycloalcoylène à 4–18 atomes de carbone,
ou un fragment alcoylène ou alcoylène-oxy-alcoylène hydroxysubstitué à 3–18 atomes de carbone, le groupe hydroxy étant en position $\beta$ par rapport au groupe sulfonyle, et

b) 55 à 95 parties en poids d'un silicate hydrosoluble de formule II

$$(X-O-)_e SiO_{\frac{4-e}{2}}$$

dans laquelle X est un cation provenant du sodium, du potassium, du lithium, du rubidium ou d'un tétraorgano-ammonium, et e a une valeur comprise entre 1 et 3.

2. Fluide de refroidissement pour systèmes de refroidissement de moteurs à combustion interne, composé principalement d'un mélange d'alcool et d'eau et contenant de petites quantités d'un copolymère obtenu par réaction de

a) 5 à 45 parties en poids d'un sulfonate d'organo-silicone de formule

$$MO_3S-R-SiO_{1,5} \quad (I)$$

dans laquelle M est un cation provenant de l'hydrogène, d'un métal alcalin ou de l'ammonium,
et R est un fragment aralcoyle à 8–14 atomes de carbone, le groupe sulfo étant fixé à la partie aryle et le silicium à la partie alcoyle,
ou un fragment alcoylène à 2–30 atomes de carbone ou un fragment cycloalcoylène à 4–18 atomes de carbone,
ou un fragment alcoylène ou alcoylène-oxy-alcoylène hydroxysubstitué à 3–18 atomes de carbone, le groupe hydroxy étant en position $\beta$ par rapport au groupe sulfonyle, et

b) 55 à 95 parties en poids d'un silicate hydrosoluble de formule II

$$(X-O-)_e SiO_{\frac{4-e}{2}}$$

dans laquelle X est un cation provenant du sodium, du potassium, du lithium, du rubidium ou d'un tétraorgano-ammonium, et e a une valeur comprise entre 1 et 3.

3. Concentré antigel selon la revendication 1, caractérisé en ce que l'alcool est l'éthylène-glycol.

4. Concentré antigel selon la revendication 1, caractérisé en ce que sa teneur en copolymère se situe entre 0,1 et 2% en poids.